# EUROPEAN PATENT APPLICATION

(11) **EP 4 401 439 A1**
(43) Date of publication of application: **17.07.2024**
(21) Application number: 22891502.1
(22) Date of filing: 21.07.2022
(51) Int. Cl.: H04W 8/26, H04W 36/12, H04L 61/50

(54) **METHOD FOR MAINTAINING CONTINUITY OF SESSION, AND COMMUNICATION APPARATUS**

(30) Priority: 09.11.2021 CN 202111321890
(71) Applicant: Huawei Technologies Co., Ltd., Shenzhen, Guangdong 518129 (CN)
(72) Inventor: ZHANG, Yanping, Shenzhen, Guangdong 518129 (CN); ZHANG, Chengchen, Shenzhen, Guangdong 518129 (CN)
(74) Representative: Pfenning, Meinig & Partner mbB
(86) International application number: PCT/CN2022/107072
(87) International publication number: WO 2023/082693

(57) **Abstract**

This application provides a method for maintaining session continuity and a communication apparatus. The method includes: A session management function network element receives a first request message from an access and mobility management function network element, where the first request message indicates that a PDU session of a terminal device is to be switched; the session management function network element determines that an anchor of the PDU session needs to be switched, where an old anchor of the PDU session is a first user plane function network element; and the session management function network element selects a second user plane function network element as a new anchor of the PDU session, and allocates a first IP address to the terminal device, where the first IP address is the same as an IP address of the terminal device used when the first user plane function network element serves as the anchor of the PDU session. According to the method, continuity of the PDU session of the terminal device can be maintained, thereby avoiding PDU session re-establishment.

## Description

### CROSS-REFERENCE TO RELATED APPLICATIONS

This application claims priority to Chinese Patent Application No. 202111321890.2, filed with the China National Intellectual Property Administration on November 9, 2021 and entitled "METHOD FOR MAINTAINING SESSION CONTINUITY AND COMMUNICATION APPARATUS", which is incorporated herein by reference in its entirety.

### TECHNICAL FIELD

This application relates to the field of wireless communications technologies, and in particular, to a method for maintaining session continuity and a communication apparatus.

### BACKGROUND

In a process of researching a 5G communication system and a 6G communication system, satellite communication gradually becomes a research hotspot, and satellite communication can be complementarily used in some scenarios such as deserts and oceans that terrestrial communication is difficult covered. In a satellite communication scenario, a network element originally located on the ground may be deployed on a satellite. For example, a radio access network (radio access network, RAN) device is deployed on a satellite, or a user plane function (user plane function, UPF) network element is deployed on a satellite.

In a scenario in which an anchor UPF network element is deployed on a satellite, when a terminal device does not move or does not move rapidly, the anchor UPF network element needs to be frequently switched. In the conventional technology, when a current anchor UPF cannot serve the terminal device, one method is to add an intermediate UPF network element, to add one hop to a user plane transmission path to continue to serve the terminal device. However, in this manner, because the anchor UPF network element changes frequently, a session management function (session management function, SMF) network element cannot manage all UPF network elements, quality of service of inter-satellite communication is poor, and it is impossible to always add an intermediate UPF network element. Therefore, this method cannot resolve the problem. Another method is to establish a session of the terminal device and release an old session of the terminal device. Because the anchor UPF network element changes frequently and sky-ground communication is related, this method causes frequent re-establishment of the session of the terminal device, which introduces large signaling overheads and a long delay, and severely affects service experience.

### SUMMARY

This application provides a method for maintaining session continuity and a communication apparatus, to avoid frequently re-establishing a session of a terminal device in a scenario in which an anchor UPF network element changes frequently.

According to a first aspect, an embodiment of this application provides a method for maintaining session continuity. The method may be performed by a session management function network element, or may be performed by a component (for example, a chip or a circuit) configured in a session management function network element.

The method includes: The session management function network element receives a first request message from an access and mobility management function network element, where the first request message indicates that a PDU session of a terminal device is to be switched; the session management function network element determines that an anchor of the PDU session needs to be switched, where an old anchor of the PDU session is a first user plane function network element; and the session management function network element selects a second user plane function network element as a new anchor of the PDU session, and allocates a first IP address to the terminal device, where the first IP address is the same as an IP address of the terminal device used when the first user plane function network element serves as the anchor of the PDU session.

In the foregoing technical solution, when the anchor of the PDU session of the terminal device needs to be switched (for example, in a scenario in which a user plane function network element serving as the anchor of the PDU session is deployed on a satellite, a location of the user plane function network element moves with movement of the satellite, and a service area of the user plane function network element also changes accordingly, and therefore the anchor of the PDU session of the terminal device needs to be switched), the session management function network element may select a new anchor for the PDU session, and allocate, the terminal device, an IP address the same as that used before the anchor switching, so that the PDU session of the terminal device can maintain continuous based on the new anchor to avoid PDU session re-establishment, thereby improving service experience and reducing signaling overheads.

In a possible design, the first user plane function network element and the second user plane function network element share a same IP address pool, the IP address pool indicates a range of an IP address that can be allocated to the terminal device, and the IP address pool includes the first IP address.

In the foregoing technical solution, the SMF may select, as the new anchor of the PDU session, a UPF that shares a same IP address pool with the old anchor of the PDU session, so that after the anchor of the PDU session is switched, the SMF can still allocate a same IP address to the terminal device.

In a possible design, that the session management function network element selects a second user plane function network element as a new anchor of the PDU session includes: The session management function network element selects the second user plane function network element as the new anchor of the PDU session from user plane function network elements sharing the IP address pool.

In a possible design, that the session management function network element selects the second user plane function network element as the new anchor of the PDU session from a plurality of user plane function network elements sharing the IP address pool includes: The session management function network element selects the second user plane function network element based on information about time at which the user plane function network elements sharing the IP address pool serve an area in which the terminal device is located or service area information of the user plane function network elements at current time.

In a possible design, the user plane function network elements sharing the IP address pool are located on different satellites, and serve, at same time or different time, the area in which the terminal device is located.

In the foregoing technical solution, a plurality of user plane function network elements sharing a same IP address pool may serve a same area. For example, the plurality of user plane function network elements are deployed on different satellites in a same orbit to serve a same area at different time. In this way, the new anchor of the PDU session of the terminal device is selected from the plurality of user plane function network elements sharing a same IP address pool, to help select a user plane function network element that can serve, at the current time, the area in which the terminal device is located, thereby ensuring continuity of the PDU session.

In a possible design, that the session management function network element selects a second user plane function network element as a new anchor of the PDU session includes: The session management function network element receives information about a target access network device from the access and mobility management function network element; and the session management function network element selects the second user plane function network element corresponding to the target access network device as the new anchor of the PDU session.

In a possible design, that the session management function network element selects a second user plane function network element as a new anchor of the PDU session includes: When the first request message includes information about the second user plane function network element, the session management function network element selects the second user plane function network element as the new anchor of the PDU session; or the method further includes: the session management function network element receives the information about the second user plane function network element from the first user plane function network element, and selects the second user plane function network element as the new anchor of the PDU session.

In the foregoing technical solution, the session management function network element may alternatively select, as the new anchor of the PDU session of the terminal device, a user plane function network element that serves as a candidate anchor and that is provided by the access and mobility management function network element by using the first request message. Information about the user plane function network element serving as the candidate anchor may be from the access and mobility management function network element, a target access network device, or a source access network device, and may be determined by the foregoing network element with reference to a switching process of the PDU session of the terminal device. According to the method, anchor selection logic of the session management function network element can be simplified, and reliability of a PDU session switching process can be enhanced.

In a possible design, that the session management function network element determines that an anchor of the PDU session needs to be switched includes: The session management function network element determines, based on the information about the second user plane function network element from the access and mobility management function network element or the first user plane function network element, that the anchor of the PDU session needs to be switched.

In a possible design, the first request message includes first indication information, and the first indication information indicates that the anchor of the PDU session needs to be switched; and that the session management function network element determines that an anchor of the PDU session needs to be switched includes: the session management function network element determines, based on the first indication information, that the anchor of the PDU session needs to be switched.

In a possible design, that the session management function network element determines that an anchor of the PDU session needs to be switched includes: The session management function network element receives second indication information from the access and mobility management function network element, where the second indication information indicates that an access network device serving the PDU session and the first user plane function network element are located on a satellite; and the session management function network element determines, based on the second indication information, that the anchor of the PDU session needs to be switched.

In the foregoing technical solution, the session management function network element may determine, in a plurality of possible manners, that the anchor of the PDU session needs to be switched. For example, the session management function network element indirectly determines, based on information about a candidate anchor received from the access and mobility management function network element, that the anchor of the PDU session needs to be switched. This manner may be understood as that the information about the candidate anchor provided by the access and mobility management function network element is a prompt indicating that the anchor of the PDU session needs to be switched. Alternatively, the session management function network element may determine, based on the first indication information provided by the access and mobility management function network element, that the anchor of the PDU session needs to be switched. This manner may be understood as follows: After learning that the PDU session needs to be switched, the access and mobility management function network element may provide explicit indication information to the session management network element, to improve switching efficiency. Alternatively, the session management function network element may determine, based on a deployment status of the old anchor of the PDU session, that the anchor of the PDU session needs to be switched. For example, the old anchor of the PDU session and the access network device serving the PDU session are located on a same satellite, and therefore, anchor switching needs to maintain synchronized with switching of the access network device. In actual application, the plurality of manners of determining that the anchor of the PDU session needs to be switched may alternatively be used in combination with each other. The plurality of manners of determining that the anchor of the PDU session needs to be switched are provided to help improve flexibility of the method.

In a possible design, the session management function network element stores configuration information of the IP address pool, and the configuration information of the IP address pool includes but is not limited to one or more of the following information: a list of user plane function network elements sharing the IP address pool, information about a satellite orbit in which the user plane function network elements sharing the IP address pool are located, identification information of the IP address pool, IP address range information of the IP address pool, information about a network instance in which the IP address pool is located, information about a network slice in which the IP address pool is located, or information about an IP version supported by the IP address pool.

In a possible design, the method further includes: The session management function network element locally configures the IP address pool; or the session management function network element receives the configuration information of the IP address pool from a network repository function network element.

In a possible design, the method further includes: The session management function network element receives related information of a first IP address pool from the first user plane function network element; the session management function network element receives related information of a second IP address pool from the second user plane function network element; and the session management function network element generates the configuration information of the IP address pool based on the related information of the first IP address pool and the related information of the second IP address pool. The related information of the first IP address pool includes but is not limited to one or more of the following information: identification information of the first user plane function network element, information about a satellite orbit in which the first user plane function network element is located, identification information of the IP address pool, IP address range information of the IP address pool, information about a network instance in which the IP address pool is located, information about a network slice in which the IP address pool is located, or information about an IP version supported by the IP address pool. The related information of the second IP address pool includes but is not limited to one or more of the following information: identification information of the second user plane function network element, information about a satellite orbit in which the second user plane function network element is located, identification information of the IP address pool, IP address range information of the IP address pool, information about a network instance in which the IP address pool is located, information about a network slice in which the IP address pool is located, or information about an IP version supported by the IP address pool.

In the foregoing technical solution, the IP address pool shared by a plurality of user plane function network elements may be configured in a plurality of manners. For example, the network repository function network element may generate the configuration information of the IP address pool, and notify the session management function network element of the configuration information. The session management function network element locally implements the configuration, to establish a mapping relationship between a user plane function network element and the IP address pool. Alternatively, the session management function network element may locally configure the IP address pool, or each user plane function network element may provide information about an IP address pool associated with the user plane function network element, and the session management function network element summarizes the information, establishes a mapping relationship between each user plane function network element and the IP address pool, and generates related configuration information of the IP address pool, to implement the foregoing configuration. In actual application, the plurality of possible manners of configuring the IP address pool may alternatively be combined with each other. The plurality of possible configuration manners help the session management function network element update and adjust, in a timely manner, the IP address pool that can be used by each user plane function network element, thereby ensuring flexibility and accuracy of IP address allocation.

According to a second aspect, an embodiment of this application provides a communication apparatus. The communication apparatus may have functions of implementing the session management function network element in the first aspect. The communication apparatus may be a network device, or may be a chip included in a network device.

The functions of the communication apparatus may be implemented by hardware, or may be implemented by hardware executing corresponding software. The hardware or the software includes one or more modules, units, or means (means) corresponding to the functions.

In a possible design, a structure of the communication apparatus includes a processing module and a transceiver module. The processing module is configured to support the communication apparatus in performing a corresponding function of the session management function network element in the first aspect. The transceiver module is configured to support communication between the communication apparatus and another communication device. For example, when the communication apparatus is a session management function network element, the transceiver module may receive a first request message from an access and mobility management function network element. The communication apparatus may further include a storage module. The storage module is coupled to the processing module. The storage module stores program instructions and data that are necessary for the communication apparatus. In an example, the processing module may be a processor, the transceiver module may be a transceiver, and the storage module may be a memory. The memory may be integrated with the processor, or may be disposed separately from the processor.

In another possible design, a structure of the communication apparatus includes a processor, and may further include a memory. The processor is coupled to the memory, and may be configured to execute computer program instructions stored in the memory, so that the communication apparatus performs the method in any possible design of the first aspect. Optionally, the communication apparatus further includes a communication interface, and the processor is coupled to the communication interface. When the communication apparatus is a network device, the communication interface may be an input/output interface of a transceiver. When the communication apparatus is a chip included in a network device, the communication interface may be an input/output interface of the chip. Optionally, the transceiver may be a transceiver circuit, and the input/output interface may be an input/output circuit.

According to a third aspect, an embodiment of this application provides a chip system, including a processor. The processor is coupled to a memory, and the memory is configured to store a program or instructions. When the program or the instructions are executed by the processor, the chip system is enabled to implement the method in any possible design of the first aspect.

Optionally, the chip system may further include an interface circuit, and the interface circuit is configured to exchange code instructions from the memory to the processor.

Optionally, there may be one or more processors in the chip system, and the processor may be implemented by hardware or may be implemented by software. When the processor is implemented by the hardware, the processor may be a logic circuit, an integrated circuit, or the like. When the processor is implemented by the software, the processor may be a general-purpose processor, and is implemented by reading software code stored in the memory.

Optionally, there may also be one or more memories in the chip system. The memory may be integrated with the processor, or may be disposed separately from the processor. For example, the memory may be a non-transitory memory, for example, a read-only memory ROM. The memory and the processor may be integrated on a same chip, or may be respectively disposed on different chips.

According to a fourth aspect, an embodiment of this application provides a computer-readable storage medium. The computer-readable storage medium stores a computer program or instructions. When the computer program or the instructions are executed, the method in any possible design of the first aspect is performed.

According to a fifth aspect, an embodiment of this application provides a computer program product. When a communication apparatus executes the computer program product, the communication apparatus is enabled to perform the method in any possible design of the first aspect.

According to a sixth aspect, an embodiment of this application provides a communication system. The communication system includes a session management function network element, an access and mobility management function network element, one or more user plane function network elements (for example, a first user plane function network element and a second user plane function network element), and a terminal device. The session management function network element may implement the method in any possible design of the first aspect.

For technical effects that can be achieved in any one of the second aspect to the sixth aspect, refer to technical effects that can be achieved in any possible design of the first aspect. Repeated parts are not described again.

### BRIEF DESCRIPTION OF DRAWINGS

FIG. 1 is a schematic diagram of a network architecture of a communication system to which an embodiment of this application is applicable;
FIG. 2 is a schematic diagram of a scenario in which a UPF is deployed on a satellite according to an embodiment of this application;
FIG. 3 is a schematic flowchart of a method for maintaining session continuity according to an embodiment of this application;
FIG. 4A and FIG. 4B are a schematic flowchart of an Xn interface-based handover scenario according to an embodiment of this application;
FIG. 5A to FIG. 5D are a schematic flowchart of an N2 interface-based handover scenario according to an embodiment of this application;
FIG. 6 is a schematic flowchart in which an SMF configures an IP address pool and allocates an IP address to a terminal device according to an embodiment of this application; and
FIG. 7 and FIG. 8 are schematic diagrams of structures of a communication apparatus according to an embodiment of this application.

### DESCRIPTION OF EMBODIMENTS

The following further describes in detail embodiments of this application with reference to the accompanying drawings.

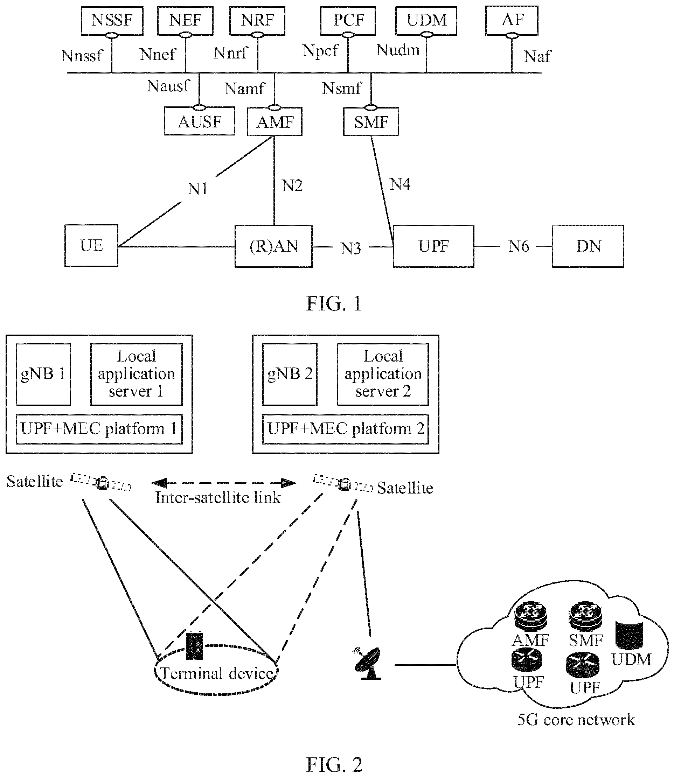

FIG. 1 shows an example of a network architecture of a communication system to which an embodiment of this application is applicable. As shown in FIG. 1, the network architecture includes a terminal device, a data network (data network, DN), and an operator network.

The operator network may include one or more of the following network elements: an authentication server function (authentication server function, AUSF) network element, an access and mobility management function (access and mobility management function, AMF) network element, a session management function (session management function, SMF) network element, a network slice selection function (network slice selection function, NSSF) network element, a network exposure function (network exposure function, NEF) network element, a network repository function (network repository function, NRF) network element, a policy control function (policy control function, PCF) network element, a unified data management (unified data management, UDM) network element, a unified data repository (unified data repository, UDR) network element (not shown), an application function (application function, AF) network element, a radio access network (radio access network, RAN) device, a user plane function (user plane function, UPF) network element, a network data analysis function (network data analysis function, NWDAF) network element (not shown), and the like. In the operator network, a network element or device other than the radio access network device may be referred to as a core network element or a core network device.

The radio access network device may be a base station (base station), an evolved NodeB (evolved NodeB, eNodeB), a transmission/reception point (transmission/reception point, TRP), a next generation NodeB (next generation NodeB, gNB) in a 5G mobile communication system, a next generation NodeB in a 6G mobile communication system, a base station in a future mobile communication system, an access node in a wireless fidelity (wireless fidelity, Wi-Fi) system, or the like; or may be a module or unit that completes some functions of a base station, for example, may be a central unit (central unit, CU), or may be a distributed unit (distributed unit, DU). The radio access network device may be a macro base station, may be a micro base station or an indoor base station, or may be a relay node, a donor node, or the like. A specific technology and a specific device form used for the radio access network device are not limited in this embodiment of this application. The radio access network device may also be referred to as an access network device for short.

A terminal communicating with a RAN may also be referred to as a terminal device, user equipment (user equipment, UE), a mobile station, a mobile terminal, or the like. The terminal may be widely used in various scenarios, for example, device-to-device (device-to-device, D2D) communication, vehicle-to-everything (vehicle-to-everything, V2X) communication, machine-type communication (machine-type communication, MTC), Internet of Things (Internet of Things, IoT), virtual reality, augmented reality, industrial control, self-driving, remote medical, a smart grid, smart furniture, smart office, smart wear, smart transportation, and a smart city. The terminal may be a mobile phone, a tablet computer, a computer with a wireless receiving/transmitting function, a wearable device, a vehicle, an uncrewed aerial vehicle, a helicopter, an airplane, a ship, a robot, a robotic arm, a smart home device, or the like. A specific technology and a specific device form used for the terminal are not limited in this embodiment of this application.

The base station and the terminal may be at fixed locations or may be movable. The base station and the terminal may be deployed on land, including indoor, outdoor, handheld, or vehicle-mounted; may be deployed on a water surface; or may be deployed on an airplane, a balloon, and an artificial satellite in the air. Application scenarios of the base station and the terminal are not limited in this embodiment of this application.

The AMF network element performs mobility management, access authentication/authorization, and the like. In addition, the AMF network element is further responsible for transmission of user policies between the terminal and the PCF.

The SMF network element performs session management, execution of control policies delivered by the PCF, UPF selection, terminal Internet Protocol (Internet Protocol, IP) address allocation, and the like.

Serving as an interface with the data network, the UPF network element performs user plane data forwarding, session/flow level-based charging statistics, bandwidth limiting, and the like.

The UDM network element performs subscription data management, user access authorization, and the like.

The UDR network element performs storage and retrieval of subscription data, policy data, application data, or another type of data, and the like.

The NEF network element is configured to support exposure of capabilities and events.

The AF network element transmits a requirement of an application side for a network side, for example, a quality of service (quality of service, QoS) requirement or user status event subscription. The AF may be a third-party function entity, or may be an operator-deployed application service, for example, an IP multimedia subsystem (IP Multimedia Subsystem, IMS) voice call service.

The PCF network element is responsible for charging for a session and a service flow level, QoS bandwidth assurance and mobility management, and terminal policy decision, and other policy control functions.

The NRF network element is configured to provide a network element discovery function, and provide, based on a request of another network element, network element information corresponding to a network element type. The NRF further provides a network element management service, such as network element registration, update, and deregistration, and network element status subscription and push.

The AUSF network element is responsible for authentication of a user to determine whether the user or a device is allowed to access a network.

The NSSF network element is configured for selection of a network slice, count users in the network slice, and the like.

The NWDAF network element is responsible for performing an analysis function based on input information collected from each node, and outputting a corresponding analysis result used in scenarios such as network operation and maintenance, policy decision, and user experience evaluation.

The DN is a network located outside the operator network. A plurality of DNs can access the operator network, and a plurality of services can be deployed on the DN, to provide services such as data and/or a voice for the terminal. For example, the DN is a private network of a smart factory, a sensor installed in a workshop of the smart factory may be the terminal, a control server of the sensor is deployed in the DN, and the control server may provide a service for the sensor. The sensor may communicate with the control server, to obtain an instruction of the control server, transmit collected sensor data to the control server based on the instructions, and the like. For another example, the DN is an internal office network of a company, a mobile phone or a computer of an employee of the company may be the terminal, and the mobile phone or the computer of the employee may access information, data resources, and the like on the internal office network of the company.

In FIG. 1, Nausf, Nnef, Npcf, Nudm, Naf, Namf, and Nsmf are respectively service-based interfaces provided by the AUSF, the NEF, the PCF, the UDM, the AF, the AMF, and the SMF, and are used to invoke a corresponding service-based operation. N1, N2, N3, N4, and N6 are interface sequence numbers. For meanings of these interface sequence numbers, refer to definitions in the 3rd generation partnership project (3rd generation partnership project, 3GPP) standard protocol. This is not limited herein.

It may be understood that, the foregoing network element or function may be a network element in a hardware device, may be a software function running on dedicated hardware, or may be a virtualization function instantiated on a platform (for example, a cloud platform). Optionally, the foregoing network element or function may be implemented by one device, may be jointly implemented by a plurality of devices, or may be a functional module in a device. This is not specifically limited in this embodiment of this application.

It should be noted that, names of all messages and information in this application are merely used as examples, and the messages and the information may have other names. This is not limited in this application. It should be understood that, a message or information from a network element 1 to a network element 2 may be a message or information directly sent by the network element 1 to the network element 2, or may be an indirectly sent message or information. For example, the network element 1 first sends a message to a network element 3, and then the network element 3 sends the message to the network element 2. The message or the information is finally sent to the network element 2 by using one or more network elements.

The access and mobility management function network element, the session management function network element, and the user plane function network element in this application may be respectively the AMF, the SMF, and the UPF in FIG. 1, or may be network elements that have functions of the AMF, the SMF, and the UPF in future communication such as a 6G network. This is not limited in this application.

For ease of description, in embodiments of this application, an example in which the AMF, the SMF, and the UPF are respectively used as the access and mobility management function network element, the session management function network element, and the user plane function network element is used to describe the technical solutions provided in this application.

FIG. 2 shows an example of a possible deployment scenario according to an embodiment of this application. As shown in FIG. 2, in this application scenario, a radio access network device (for example, a gNB), a UPF, an MEC platform, and a server (for example, a local application server (local app server)) of a local data network may be deployed on a satellite, and network elements such as an AMF, an SMF, a UPF, and a UDM may be deployed on the ground.

However, it should be noted that the foregoing deployment scenario is merely an example, and this application is not limited thereto. In some other possible deployment scenarios, the radio access network device and a data network may alternatively be deployed on the ground.

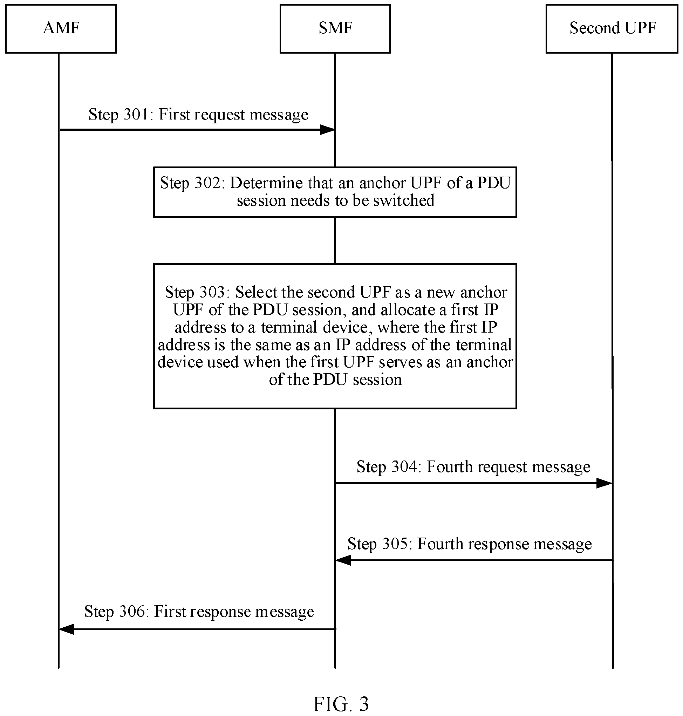

FIG. 3 shows an example of a method for maintaining session continuity according to an embodiment of this application. As shown in FIG. 3, the method includes the following steps.

Step 301: An AMF sends a first request message to an SMF, where the first request message indicates that a PDU session of a terminal device is to be switched. Correspondingly, the SMF receives the first request message from the AMF.

For example, the first request message may be a session management context update request message.

That the PDU session is to be switched (to be switched) means that a radio access network device corresponding to the PDU session needs to be handed over (handover). Specifically, in an uplink direction, data of the PDU session passes through the terminal device, the radio access network device, and a UPF, and then reaches a DN. During movement of the terminal device, a radio access network device accessed by the terminal device changes, that is, the radio access network device is handed over. Therefore, after the handover, the data of the PDU session no longer passes through a source access network device, but passes through a target access network device. After receiving a handover request from the source access network device, the AMF may notify the SMF corresponding to the PDU session, to indicate that the PDU session is to be switched. It should be noted that the "handover" mentioned in this application may be expressed in another manner, for example, "replacement" or "change". This is not limited.

For example, in the first request message sent by the AMF to the SMF, there may be two information elements (information element, IE) indicating that the PDU session is to be switched. One IE indicates a session management context identifier, and the session management context identifier is used to identify a PDU session, for example, the PDU session may be indicated by a uniform resource identifier (uniform resource identifier, URI) of a resource. The other IE indicates that the PDU session needs to be switched. For example, the IE may be a Boolean information element, and indicates whether the PDU session needs to be switched. Optionally, before the AMF sends the first request message to the SMF, corresponding to an Xn interface-based handover scenario, the AMF may receive a second request message from the target access network device. For example, the second request message may be an N2 path switching request message. The second request message may include a container that is transparently transmitted to the SMF by using the AMF. To be specific, after receiving the second request message, the AMF may transparently forward the container in the second request message to the SMF. The container may include first indication information. The first indication information indicates that an anchor UPF of the PDU session needs to be switched (switch), or indicates a PDU session whose anchor UPF needs to be switched. Alternatively, corresponding to an N2 interface-based handover scenario, the AMF may receive a third request message from the source access network device. For example, the third request message may be a handover requirement message. The third request message may include a container that is transparently transmitted to the SMF by using the AMF. To be specific, after receiving the third request message, the AMF may transparently forward the container in the third request message to the SMF. The container may include first indication information. The first indication information indicates that an anchor UPF of the PDU session needs to be switched (switch), or indicates a PDU session whose anchor UPF needs to be switched.

Optionally, if an old (old) anchor UPF of the PDU session no longer serves an area in which the terminal device is located, and it is assumed that the old anchor UPF of the PDU session is a first UPF, the first request message may further include information about a second UPF. The second UPF is used to serve as a candidate of a new (new) anchor UPF of the PDU session, and may also be referred to as a candidate anchor UPF. The second UPF may currently serve the area in which the terminal device is located, or is about to serve the area in which the terminal device is located.

The information about the second UPF may be from the AMF, or may be from the target access network device or the source access network device. This is not specifically limited in this application. To be specific, the second UPF used to serve as a candidate of the new anchor UPF of the PDU session may be determined by the AMF, and sent to the SMF by using the first request message. Alternatively, the second UPF used to serve as a candidate of the new anchor UPF of the PDU session may be determined by the target access network device, sent to the AMF by using the second request message, and then forwarded by the AMF to the SMF by using the first request message. In other words, the second request message may include the information about the second UPF used to serve as a candidate of the new anchor UPF of the PDU session. Alternatively, the second UPF used to serve as a candidate of the new anchor UPF of the PDU session may be determined by the source access network device, sent to the AMF by using the third request message, and then forwarded by the AMF to the SMF by using the first request message. In other words, the third request message may include the information about the second UPF used to serve as a candidate of the new anchor UPF of the PDU session.

A manner of determining the information about the second UPF by the AMF, the target access network device, or the source access network device is not specifically limited in this application. For example, for the AMF, the target access network device may provide, to the AMF in a setup (setup) procedure, information about a second UPF corresponding to the target access network device, or the AMF may locally configure the information about the second UPF corresponding to the target access network device. In this way, the AMF may determine, based on information about the target access network device of the PDU session and the information provided by the target access network device or the locally configured information, the information about the second UPF used to serve as a candidate of the new anchor UPF of the PDU session. For the target access network device, the target access network device may determine, through configuration by using an operation, administration and maintenance (operation, administration and maintenance, OAM) system, the information about the second UPF used to serve as a candidate of the new anchor UPF of the PDU session. For the source access network device, the source access network device may determine, through OAM configuration, the information about the second UPF used to serve as a candidate of the new anchor UPF of the PDU session; or may obtain, from the target access network device by interacting with the target access network device, the information about the second UPF used to serve as a candidate of the new anchor UPF of the PDU session.

It should be noted that one terminal device may have one or more PDU sessions. In this application, one PDU session (namely, the PDU session) of the terminal device is used as an example to describe how to switch a session anchor UPF of a to-be-switched PDU session.

When the terminal device has a plurality of PDU sessions to be switched, the first request message may provide, for each to-be-switched PDU session, information about a corresponding UPF used to serve as a candidate of a new anchor UPF of the PDU session. In other words, the first request message may include information about a plurality of UPFs used to serve as candidates of the new anchor UPF. Optionally, one UPF serving as a candidate of the new anchor UPF may correspond to one or more PDU sessions of the terminal device. For example, corresponding indication information may be used to indicate a specific PDU session corresponding to each UPF serving as a candidate of the new anchor UPF.

Step 302: The SMF determines that the anchor UPF of the PDU session needs to be switched. Herein, it is assumed that the old anchor UPF of the PDU session is the first UPF.

In a possible implementation, the first request message may include first indication information, and the first indication information indicates that the anchor UPF of the PDU session needs to be switched (replace/change). In this way, the SMF may determine, based on the first indication information, that the anchor UPF of the PDU session needs to be switched. The first indication information may be provided by the AMF.

In another possible implementation, if the first request message includes the information about the second UPF used to serve as a candidate of the new anchor UPF of the PDU session, the SMF may determine, based on the information about the second UPF used to serve as a candidate of the new anchor UPF of the PDU session, that the anchor UPF of the PDU session needs to be switched. As described above, the information about the second UPF may be provided by the AMF, or may be provided by the target access network device or the source access network device. This is not limited. This implementation may be understood as follows: If the AMF, the target access network device, or the source access network device provides a candidate used to serve as the new anchor UPF of the PDU session, it is considered that the anchor UPF of the PDU session needs to be switched.

In still another possible implementation, the SMF may receive second indication information from the AMF in advance, where the second indication information indicates that an access network device serving the PDU session and the first UPF are located on a same satellite. After receiving the first request message, the SMF may determine, based on the previously received second indication information, that the anchor UPF of the PDU session needs to be switched.

In still another possible implementation, the SMF may receive information about the source access network device from the AMF in advance. After receiving the first request message, the SMF may determine, based on the information about the source access network device and information about the first UPF, that the anchor UPF of the PDU session needs to be switched. For example, the source access network device is located on a satellite, and the first UPF and the source access network device are located on a same satellite.

Step 303: The SMF selects the second UPF as the new anchor UPF of the PDU session, and allocates a first IP address to the terminal device, where the first IP address may be the same as an IP address of the terminal device used when the first UPF serves as the anchor of the PDU session.

In this application, the first UPF is the old anchor UPF of the PDU session, and the second UPF is the new anchor UPF of the PDU session or a candidate (namely, a candidate anchor UPF) of the new anchor UPF. The anchor UPF of the PDU session may also be referred to as an anchor of the PDU session, the old anchor UPF may also be referred to as a source (source) anchor UPF, the new anchor UPF may also be referred to as a target (target) anchor UPF, and a candidate of the new anchor UPF may also be referred to as a candidate target anchor UPF or a candidate anchor UPF.

Both the first UPF and the second UPF may be connected to a data network to which the terminal device needs to connect. The data network may be a same data network, or may be different data networks. This is not specifically limited in this application.

The first UPF and the second UPF may be located on a satellite; or one of the first UPF and the second UPF is located on a satellite, and the other is located on the ground. For example, in a possible deployment manner, the first UPF and the second UPF may be located on different satellites, and the source access network device and the target access network device may be located on the ground. In another possible deployment manner, the first UPF and the second UPF may be located on different satellites, and the source access network device and the first UPF may be located on a same satellite, and/or the target access network device and the second UPF may be located on different satellites.

It should be noted that the first UPF and the second UPF may share a same IP address pool. The IP address pool indicates a range of an IP address that can be allocated to the terminal device. The IP address pool may include one or more IP addresses, for example, include the first IP address.

Based on the shared IP address pool, if the old anchor UPF cannot continue to serve the PDU session of the terminal device due to various reasons (for example, the old anchor UPF is located on a satellite, and coverage of the old anchor UPF also moves as the satellite moves), the SMF may switch the anchor UPF of the PDU session, and allocate, to the terminal device, an IP address the same as that used before the anchor UPF is switched, so that the PDU session of the terminal device maintains continuous, and the PDU session of the terminal device does not need to be re-established, thereby improving service experience and reduces signaling overheads.

The SMF may store configuration information of the IP address pool, and the configuration information of the IP address pool may include one or more of the following information: a list of UPFs sharing the IP address pool, information about a satellite orbit in which the UPFs sharing the IP address pool are located, identification information of the IP address pool, IP address range information of the IP address pool, information about a network instance in which the IP address pool is located, information about a network slice in which the IP address pool is located, or information about an IP version supported by the IP address pool.

The list of UPFs sharing the IP address pool may include identification information or address information of a series of UPFs, or the list may be represented in another manner. This is not specifically limited in this application. The UPFs in the list may serve a same area. That "the UPFs may serve a same area" means that different UPFs may serve a same area in different time periods. For example, these UPFs may be deployed on different satellites in a same orbit. Optionally, information about the UPFs in the list may be arranged in a time sequence of serving a specific area. The identification information of the IP address pool uniquely identifies an IP address pool shared by a plurality of UPFs. The information about the IP version refers to IPv4 or IPv6.

The IP address pool may be preconfigured or temporarily configured by the SMF. This is not specifically limited in this application. In other words, an IP address pool that can be shared by a plurality of UPFs may be preconfigured in the SMF, and the plurality of UPFs may include the first UPF and the second UPF, or further include another UPF. Alternatively, when the SMF needs to allocate an IP address to the terminal device, the SMF may temporarily determine to enable the first UPF and the second UPF to share a same IP address, for example, the first IP address, and therefore temporarily construct an IP address pool shared by the two UPFs, although the IP address pool currently includes only the first IP address. A plurality of manners of configuring the IP address pool by the SMF are described in detail below in this application.

Based on the foregoing content, in a possible implementation, that the SMF selects the second UPF as the new anchor UPF of the PDU session may be as follows: The SMF selects the second UPF as the new anchor UPF of the PDU session from UPFs sharing the IP address pool.

For example, the SMF may select the second UPF based on information about time at which the UPFs sharing the IP address pool serve the area in which the terminal device is located or service area information of the UPFs at current time. The second UPF is a UPF that can currently serve the area in which the terminal device is located or is about to be able to serve the area in which the terminal device is located. Optionally, the time information and the service area information may be determined by the SMF based on locally configured information or satellite ephemeris information.

Further, the time information may include information about time periods in which the UPFs serve the area in which the terminal device is located or information about a time sequence of serving, by the UPFs, the area in which the terminal device is located. In this way, that the second UPF is selected based on the information about the time at which the UPFs serve the area in which the terminal device is located may be: selecting a UPF that can serve, in a current time period or an upcoming time period, the area in which the terminal device is located. That the second UPF is selected based on the information about the time sequence of serving, by the UPFs, the area in which the terminal device is located may be: selecting, as the second UPF based on the time sequence of serving, by the UPFs, the area in which the terminal device is located, a next UPF that is after the first UPF and that can serve the area in which the terminal device is located. The service area information may be information about an identifier of an area managed by the UPF, for example, may be tracking area (tracking area) list information, may be cell list information, or may be information about an area identified by one or more longitudes and latitudes. In this way, that the second UPF is selected based on the service area information of the UPFs at the current time may be: selecting, as the second UPF, a UPF that is in a service area at the current time and that matches the area in which the terminal device is located.

For example, an access network device and a UPF are deployed on different satellites. To maintain session continuity, the SMF locally configures or receives information about an address pool of another network element (such as a PCF/UDM). The information about the address pool indicates an address pool shared by UPFs on a satellite that can serve the area in which the terminal device is located. For example, satellites in a same orbit pass through the area in which the terminal device is located, and UPFs on the satellite in the orbit share an address pool. Herein, the UPFs that are located on different satellites and that share an address pool include the first UPF and the second UPF. A source RAN and the first UPF are located on a same satellite. When the source RAN and the first UPF are switched, the SMF determines that the anchor UPF also needs to be switched. A target RAN and the second UPF are located on a same satellite. The SMF selects the anchor UPF based on the information about the second UPF provided by the AMF, the first UPF, or the like; or selects the anchor UPF based on information about the target RAN, and preferentially selects, as the target UPF, a second UPF located on a same satellite as the target RAN.

In another possible implementation, that the SMF selects the second UPF as the new anchor UPF of the PDU session may be as follows: If the first request message includes the information about the second UPF used to serve as a candidate of the new anchor UPF of the PDU session, the SMF selects, as the new anchor UPF of the PDU session, the second UPF used to serve as a candidate of the new anchor UPF of the PDU session. Alternatively, if the SMF receives, from the first UPF, the information about the second UPF used to serve as a candidate of the new anchor UPF of the PDU session, the SMF may select, as the new anchor UPF of the PDU session, the second UPF used to serve as a candidate of the new anchor UPF of the PDU session. For example, in a scenario in which both the first UPF and the second UPF are located on a satellite, and the second UPF is located on a satellite adjacent to a satellite on which the first UPF is located, the first UPF may provide the information about the second UPF to the SMF, and the second UPF is used as a candidate of the new anchor UPF.

In other words, if the AMF, the target access network device, the source access network device, or the old anchor UPF provides information about a candidate target anchor UPF to the SMF, the SMF may select the candidate target anchor UPF as the target anchor UPF.

It should be noted that in this implementation, an IP address pool shared by the first UPF and another UPF may be preconfigured in the SMF, or the IP address pool shared by the first UPF and another UPF may not be configured in the SMF. If the IP address pool shared by the first UPF and another UPF is preconfigured in the SMF, the second UPF may be one of a plurality of UPFs sharing a same IP address pool with the first UPF, or may be another UPF. This is not specifically limited in this application. That the second UPF may be another UPF means the following: If a candidate (namely, the second UPF) of the new anchor UPF is not in the list of UPFs sharing the IP address pool, the SMF can still select the candidate (namely, the second UPF) of the new anchor UPF as the new anchor UPF, and allocate, to the terminal device, an IP address the same as that used before the anchor UPF is switched. This solution is equivalent to that the SMF temporarily determines to enable the first UPF and the second UPF to share a same IP address. If the IP address pool shared by the first UPF and another UPF is not configured in the SMF, the SMF may directly select a candidate (namely, the second UPF) of the new anchor UPF as the new anchor UPF. This solution is also equivalent to that the SMF temporarily determines to enable the first UPF and the second UPF to share a same IP address.

In still another possible implementation, that the SMF selects the second UPF as the new anchor UPF of the PDU session may be as follows: The SMF receives, information about the target access network device (for example, a type and identification information of the target access network device) from the target access network device or the AMF, and then selects, based on the received information about the target access network device, a second UPF corresponding to the target access network device as the new anchor UPF. For example, the target access network device and the second UPF are located on a same satellite, and there is a preconfigured correspondence between the target access network device and the second UPF. In this scenario, the SMF may select, as the new anchor UPF, a second UPF located on a same satellite as the target access network device, to provide a shorter delay and better quality of service to the terminal device.

Step 304: The SMF sends a fourth request message to the second UPF.

For example, the fourth request message may be an N4 session establishment request message.

The fourth request message may include a configuration forwarding rule, for example, a packet detection rule (packet detection rule, PDR) or a forwarding action rule (forwarding action rule, FAR). The configuration forwarding rule includes the first IP address. The fourth request message may further include N3 tunnel information (also referred to as downlink tunnel information) of the target access network device, to establish a downlink data transmission tunnel between the second UPF and the target access network device.

Step 305: The SMF receives a fourth response message from the second UPF.

The fourth response message may be an N4 session establishment response message.

After this step, the second UPF may send downlink data to the target access network device, and the target access network device further sends the downlink data to the terminal device.

After the anchor of the PDU session is switched, a data plane transmission path of the PDU session changes (that is, the path changes from original "UE -> a RAN -> the old anchor UPF -> the DN" to "the UE -> the RAN -> the new anchor UPF 2 -> the DN"). Therefore, to ensure that data packets in a service flow of the PDU session are transmitted in sequence, the new anchor UPF and the connected data network in this application may further re-adjust a sequence of the data packets in the service flow of the PDU session. For example, the sequence may be adjusted in the following manner.

If the first UPF and the second UPF are connected to different data networks, which may respectively be, for example, local data networks, the different local data networks may respectively exchange data flow information, for example, a sequence number of a data packet, with corresponding UPFs to adjust the sequence; or the different data networks respectively exchange the data flow information with the terminal device to adjust the sequence. If the first UPF and the second UPF are connected to a same data network, which may be, for example, a central data network, the data network may separately exchange data flow information with different UPFs to adjust the sequence; or the data network may exchange the data flow information, for example, a sequence number of a data packet, with the terminal device to adjust the sequence. It should be noted that a manner of re-adjusting a sequence of a service flow is not specifically limited in this application. The foregoing manner is merely an example. This application includes but is not limited thereto.

Step 306: The SMF sends a first response message to the AMF.

For example, the first response message may be a session management context update response message.

Optionally, the first response message may include N3 tunnel information (also referred to as uplink tunnel information) of the second UPF, and the N3 tunnel information is transparently transmitted to the target access network device by using the AMF, to establish an uplink data transmission tunnel between the target access network device and the second UPF.

In an implementation, corresponding to an Xn interface-based handover scenario, the AMF may send a second response message to the target access network device. For example, the second response message may be an N2 path switching response message. Then, the target access network device may further send a resource release message to the source access network device, to trigger the source access network device to release a related resource of the PDU session, and confirm that the handover succeeds, that is, the PDU session is successfully switched from the source access network device to the target access network device.

In another implementation, corresponding to an N2 interface-based handover scenario, after completing a handover on the target access network device side, the AMF may send a third response message to the source access network device. For example, the third response message may be a handover command message. The source access network device may further send a handover command message to the terminal device, so that the terminal device is synchronized to the target access network device. Subsequently, after the terminal device is successfully handed over, the AMF may trigger the source access network device to release a related resource.

The technical solutions provided in embodiments of this application are described in detail below by using two specific examples.

### Example 1:

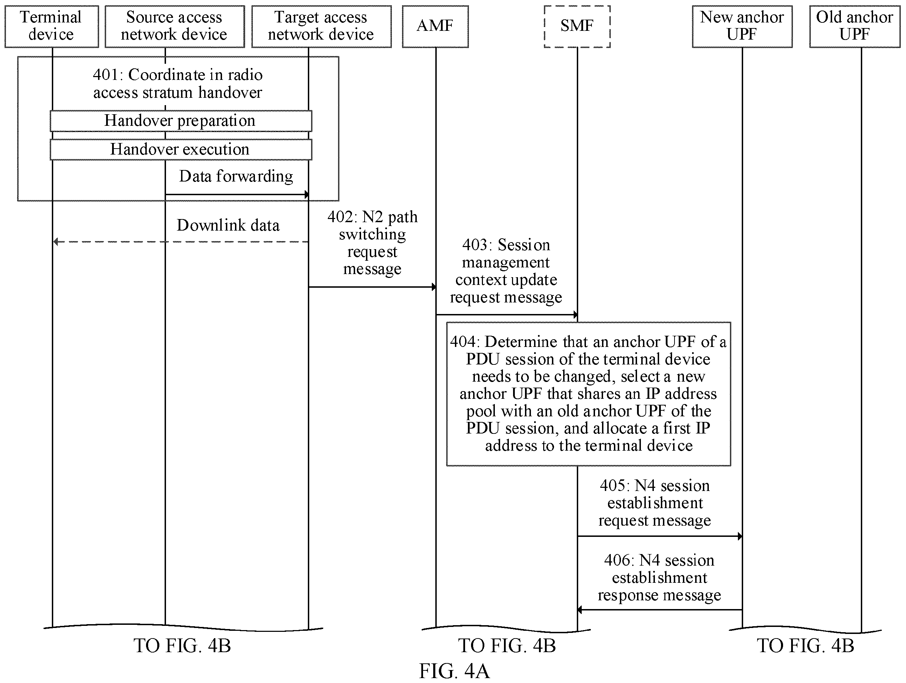

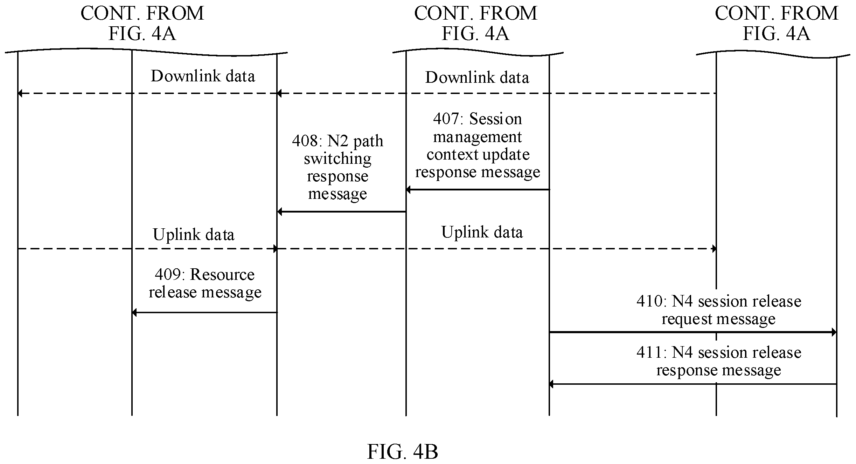

Refer to FIG. 4A and FIG. 4B, in an Xn interface-based handover scenario, a method in Example 1 may include the following steps.

Step 401: A source access network device and a target access network device coordinate in radio access stratum handover.

This step may include processes such as handover preparation and handover execution. In the handover execution process, the source access network device may forward data of a service flow of a terminal device to the target access network device.

Step 402: The target access network device sends an N2 path switching request message to the AMF, and correspondingly, the AMF receives the N2 path switching request message from the target access network device.

The N2 path switching request message is used to request to switch a PDU session of the terminal device. The N2 path switching request message may include identification information of the PDU session and N2 session management information (also referred to as path switching request transmission information). The N2 session management information may include related information of the PDU session, for example, information about a downlink user plane transmission network layer and user plane security information. The N2 session management information is a container that can be transparently transmitted to an SMF by using the AMF. To be specific, after being sent to the AMF by using the N2 path switching request message, the N2 session management information may be transparently transmitted by the AMF to the SMF by using a session management update request message, and the SMF may determine the to-be-switched PDU session based on the N2 session management information.

Optionally, the N2 path switching request message may include information about a UPF used to serve as a candidate of a new anchor UPF of the PDU session. For example, the information about the UPF used to serve as a candidate of the new anchor UPF of the PDU session may be included in the N2 session management information in the N2 path switching request message. For a specific implementation in which the target access network device determines the information about the UPF used to serve as a candidate of the new anchor UPF of the PDU session, refer to the foregoing related descriptions. Details are not described herein again.

Further, the N2 path switching request message may further include first indication information. The first indication information indicates that an anchor UPF of the PDU session needs to be switched, or indicates a PDU session whose anchor UPF needs to be switched. For example, the first indication information may be included in the N2 session management information in the N2 path switching request message.

Step 403: The AMF sends a session management update request message to the SMF, and correspondingly, the SMF receives the session management update request message from the AMF.

The session management update request message is used to request to update session management context of the PDU session of the terminal device. The session management update request message may include the N2 session management information received by the AMF from the target access network device.

Optionally, the session management update request message may include information about a second UPF used to serve as a candidate of the new anchor UPF of the PDU session. For example, the information about the UPF used to serve as a candidate of the new anchor UPF of the PDU session may be included in N2 session management information received by the AMF from the target access network device, or the information about the UPF used to serve as a candidate of the new anchor UPF of the PDU session may be determined by the AMF and carried in the session management update request message. For a specific implementation in which the AMF determines the information about the UPF used to serve as a candidate of the new anchor UPF of the PDU session, refer to the foregoing related descriptions. Details are not described herein again.

Optionally, the session management update request message may include the first indication information. The first indication information indicates that the anchor UPF of the PDU session needs to be switched, or indicates a PDU session whose anchor UPF needs to be switched. For example, the first indication information may be included in the N2 session management information received by the AMF from the target access network device.

Step 404: If the SMF determines that the anchor UPF of the PDU session of the terminal device needs to be switched, the SMF selects a new anchor UPF that shares an IP address pool with an old anchor UPF of the PDU session, and allocates a first IP address to the terminal device, where the first IP address is the same as an IP address of the terminal device used before the anchor UPF of the PDU session is switched.

The old anchor UPF of the PDU session may be a first UPF, the new anchor UPF of the PDU session may be a second UPF, and the first UPF and the second UPF share a same IP address pool.

It should be noted that, that the first UPF and the second UPF share a same IP address pool may mean that the SMF preconfigures an IP address pool shared by a plurality of UPFs, where the plurality of UPFs include the first UPF and the second UPF, and the IP address pool includes one or more IP addresses, for example, the first IP address; or may mean that the SMF temporarily determines to enable the first UPF and the second UPF to share the first IP address, for example, when the SMF does not configure that the first UPF can share an IP address pool with another UPF.

For a specific implementation in which the SMF determines that the anchor UPF of the PDU session needs to be switched, and the SMF selects the new anchor UPF of the PDU session, refer to the foregoing related descriptions. Details are not described herein again.

Step 405: The SMF sends an N4 session establishment request message to the new anchor UPF; and correspondingly, the new anchor UPF receives the N4 session establishment request message from the SMF.

The N4 session establishment request message may include N3 tunnel information of the target access network device.

Step 406: The new anchor UPF sends an N4 session establishment response message to the SMF; and correspondingly, the SMF receives the N4 session establishment response message from the new anchor UPF.

After this step, the new anchor UPF may send downlink data of the PDU session to the target access network device, and the target access network device further sends the downlink data to the terminal device.

Step 407: The SMF sends a session management context update response message to the AMF; and correspondingly, the AMF receives the session management context update response message from the SMF.

The session management context update response message may include N3 tunnel information of the new anchor UPF, and the N3 tunnel information of the new anchor UPF is transparently transmitted to the target access network device by using the AMF.

Step 408: The AMF sends an N2 path switching response message to the target access network device; and correspondingly, the target access network device receives the N2 path switching response message from the AMF.

Step 409: The target access network device sends a resource release message to the source access network device; and correspondingly, the source access network device receives the resource release message from the target access network device.

The resource release message may trigger the source access network device to release a related resource of the PDU session, and confirm that the handover succeeds.

Step 410: The SMF sends an N4 session release request message to the old anchor UPF, and correspondingly, the old anchor UPF receives the N4 session release request message from the SMF.

The N4 session release request message is used to request to release a related resource of an N4 session.

Step 411: The old anchor UPF sends an N4 session release response message to the SMF, and correspondingly, the SMF receives the N4 session release response message from the old anchor UPF.

### Example 2:

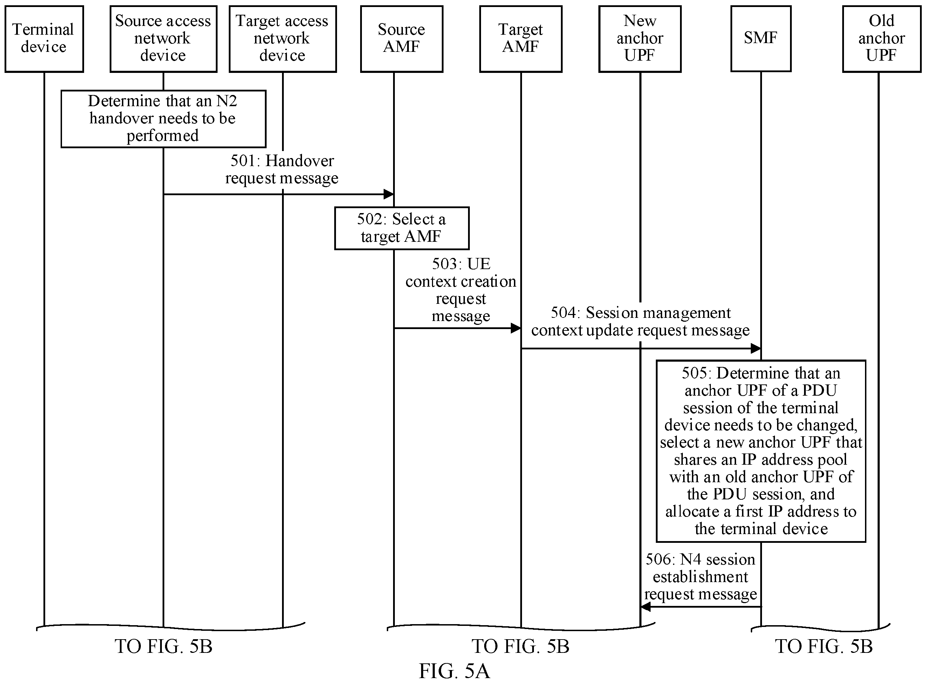

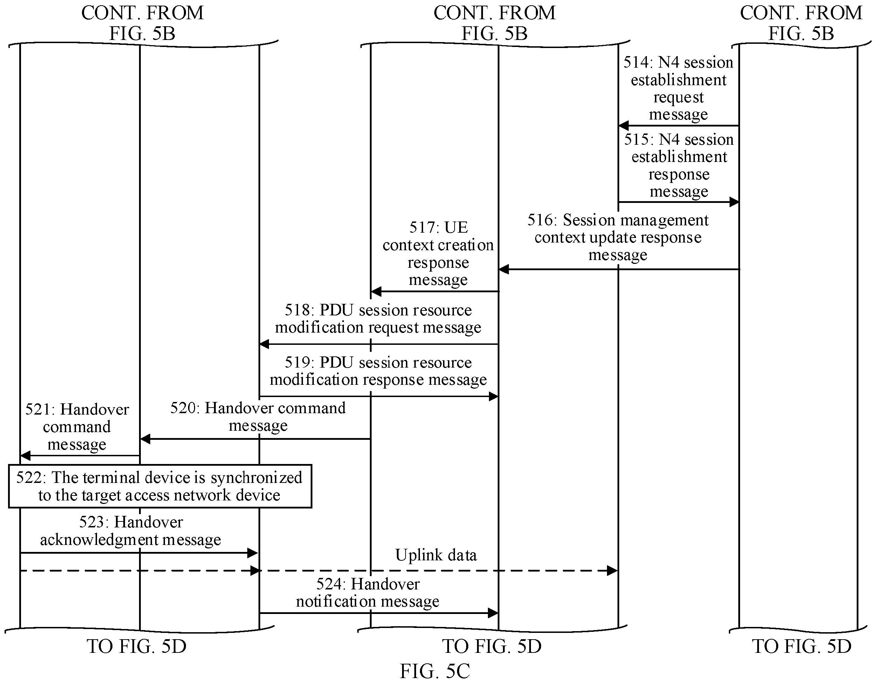

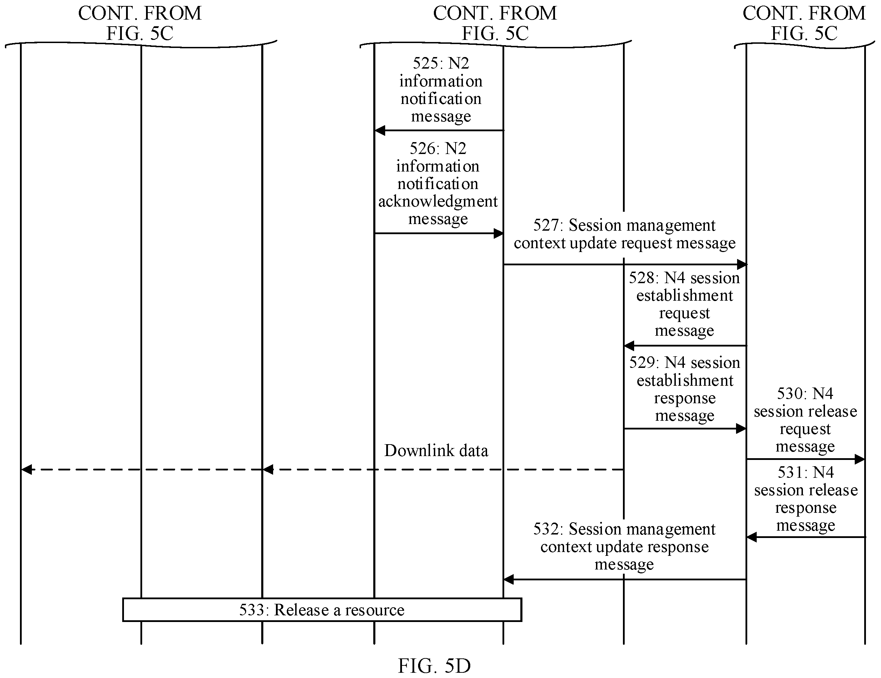

Refer to FIG. 5A to FIG. 5D, in an N2 interface-based handover scenario, a method in Example 2 may include the following steps.

Step 501: After determining that N2 handover needs to be performed, a source access network device sends a handover requirement message to a source AMF.

The handover requirement message is used to request to switch a PDU session of a terminal device. The handover requirement message may include identification information of the PDU session and N2 session management information (also referred to as path switching request transmission information). The N2 session management information may include related information of the PDU session, for example, information about a downlink user plane transmission network layer and user plane security information. The N2 session management information is a container that can be transparently transmitted to an SMF by using an AMF. To be specific, after being sent to the source AMF by using the handover requirement message, the N2 session management information may be forwarded by the source AMF to a target AMF, and is transparently transmitted by the target AMF to the SMF by using a session management update request message. The SMF may determine the to-be-switched PDU session based on the N2 session management information.

In an implementation solution 1, optionally, the handover requirement message may include information about a UPF used to serve as a candidate of a new anchor UPF of the PDU session. For example, the information about the UPF used to serve as a candidate of the new anchor UPF of the PDU session may be included in the N2 session management information in the handover requirement message. For a specific implementation in which the source access network device determines the information about the UPF used to serve as a candidate of the new anchor UPF of the PDU session, refer to the foregoing related descriptions. Details are not described herein again.

Optionally, the handover requirement message may further include first indication information. The first indication information indicates that an anchor UPF of the PDU session needs to be switched, or indicates a PDU session whose anchor UPF needs to be switched. For example, the first indication information may be included in the N2 session management information in the handover requirement message.

Step 502: If the source AMF cannot continue to serve the terminal device, the source AMF selects a target AMF.

If the source AMF can continue to serve the terminal device, the source AMF does not need to select the target AMF. In this example, all steps related to interaction between the source AMF and the target AMF can be omitted, and interaction with another network element and processing on an AMF side are performed by one AMF, namely, the source AMF.

Step 503: The source AMF forwards received information to the target AMF, for example, may send the information by using a UE context creation request message.

Optionally, the source AMF may send, to the target AMF, the information about the UPF used to serve as a candidate of the new anchor UPF of the PDU session, or directly send the information to the SMF. The information may be received by the source AMF from the source access network device, or may be determined by the source AMF.

Step 504: The target AMF sends a session management context update request message to the SMF.

The session management context request message may include the information about the UPF used to serve as a candidate of the new anchor UPF of the PDU session. The information may be received by the target AMF from the source AMF, or may be determined by the target AMF.

For a specific implementation in which the source AMF or the target AMF determines the information about the UPF used to serve as a candidate of the new anchor UPF of the PDU session, refer to the foregoing related descriptions. Details are not described herein again.

Step 505 (implementation solution 1): If the SMF determines that the anchor UPF of the PDU session of the terminal device needs to be switched, the SMF selects a new anchor UPF that shares an IP address pool with an old anchor UPF of the PDU session, and allocates a first IP address to the terminal device, where the first IP address is the same as an IP address of the terminal device used before the anchor UPF of the PDU session is switched.

The old anchor UPF of the PDU session may be a first UPF, the new anchor UPF of the PDU session may be a second UPF, and the first UPF and the second UPF share a same IP address pool.

It should be noted that, that the first UPF and the second UPF share a same IP address pool may mean that the SMF preconfigures an IP address pool shared by a plurality of UPFs, where the plurality of UPFs include the first UPF and the second UPF, and the IP address pool includes one or more IP addresses, for example, the first IP address; or may mean that the SMF temporarily determines to enable the first UPF and the second UPF to share the first IP address, for example, when the SMF does not configure that the first UPF can share an IP address pool with another UPF.

For a specific implementation in which the SMF determines that the anchor UPF of the PDU session needs to be switched, and the SMF selects the new anchor UPF of the PDU session, refer to the foregoing related descriptions. Details are not described herein again.

Step 506 (implementation solution 1): The SMF sends an N4 session establishment request message to the new anchor UPF.

Optionally, the N4 session establishment request message may include N3 tunnel information of a target access network device.

Step 507 (implementation solution 1): The new anchor UPF sends an N4 session establishment response message to the SMF.

Step 508: The SMF sends a session management context update response message to the target AMF.

In the implementation solution 1, optionally, the session management context update response message may include N3 tunnel information of the new anchor UPF.

Step 509: The target AMF waits for responses (PDU handover response supervision) from all SMFs.

Step 510: The target AMF sends a handover request message to the target access network device.

The handover request message includes a transparent container from the source access network device to the target access network device.

Step 511: The target access network device sends a handover request acknowledgment message to the target AMF.

The handover request acknowledgment message includes the N3 tunnel information of the target access network device, and the N3 tunnel information is transparently transmitted to the SMF by using the AMF.

Optionally, the handover request acknowledgment message may include the information about the UPF used to serve as a candidate of the new anchor UPF of the PDU session. For a specific implementation in which the target access network device determines the information about the UPF used to serve as a candidate of the new anchor UPF of the PDU session, refer to the foregoing related descriptions. Details are not described herein again.

Step 512: The target AMF sends a session management context update request message to the SMF.

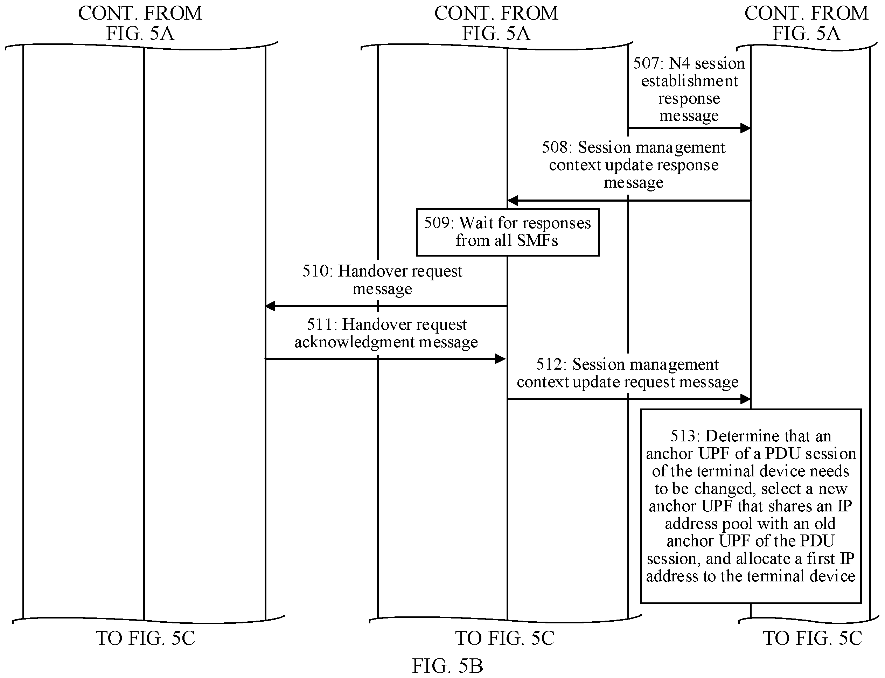

In the implementation 1, optionally, the session management context request message may include the N3 tunnel information of the target access network device. Then, the SMF may further send an N4 session modification request message to the new anchor UPF, configure the N3 tunnel information of the target access network device to the new anchor UPF by using the N4 session modification request message, and receive an N4 session modification response message from the new anchor UPF. The two steps are not shown in FIG. 5B temporarily. It may be understood that the two steps are similar to the following step 514 and step 515.

In an implementation 2, optionally, the session management context request message may include the information about the UPF used to serve as a candidate of the new anchor UPF of the PDU session. The information may be received by the target AMF from the target access network device, or may be determined by the target AMF.

Step 513 (implementation solution 2): If the SMF determines that the anchor UPF of the PDU session of the terminal device needs to be switched, the SMF selects a new anchor UPF that shares an IP address pool with an old anchor UPF of the PDU session, and allocates a first IP address to the PDU session of the terminal device, where the first IP address is the same as an IP address of the terminal device used before the anchor UPF of the PDU session is switched.

Step 514 (implementation solution 2): The SMF sends an N4 session establishment request message to the new anchor UPF.

Optionally, the N4 session establishment request message may include N3 tunnel information of the target access network device.

Step 515 (implementation solution 2): The new anchor UPF sends an N4 session establishment response message to the SMF.

For specific implementations of step 513 to step 515, refer to the foregoing related descriptions of step 505 to step 507. Details are not described again.

Step 516: The SMF sends a session management context update response message to the target AMF.

In the implementation solution 2, optionally, the session management context update response message may include N3 tunnel information of the new anchor UPF.

Step 517: The target AMF sends a UE context creation response message to the source AMF.

Step 518: The target AMF sends a PDU session resource modification request message to the target access network device.

In the implementation 2, optionally, the PDU session resource modification request message may include the N3 tunnel information of the new anchor UPF.

Step 519: The target access network device sends a PDU session resource modification response message to the target AMF.

Step 520: The source AMF sends a handover command message to the source access network device.

Step 521: The source access network device sends a handover command message to the terminal device.

Step 522: The terminal device is synchronized to the target access network device.

Step 523: The terminal device sends a handover acknowledgment message to the target access network device, to confirm that the handover succeeds.

Then, uplink data may be sent by the terminal device to the target access network device, and then sent by the target access network device to the new anchor UPF.

Step 524: The target access network device sends a handover notification message to the target AMF, to notify that the handover is completed.

Step 525: The target AMF sends an N2 information notification message to the source AMF.

Step 526: The source AMF sends an N2 information notification acknowledgment message to the target AMF.

Step 527: The target AMF sends a session management context update request message to the SMF, to notify the SMF that the handover is completed.

Step 528 (implementation solution 3): The SMF sends an N4 session establishment request message to the new anchor UPF.

Optionally, the N4 session establishment request message may include N3 tunnel information of the target access network device.

Step 529 (implementation solution 3): The new anchor UPF sends an N4 session establishment response message to the SMF.

Then, downlink data may be sent by the new anchor UPF to the target access network device, and then sent by the target access network device to the terminal device.

Step 530: The SMF sends an N4 session release request message to the old anchor UPF, where the N4 session release request is used to trigger the old anchor UPF to release a related resource.

Step 531: The old anchor UPF sends an N4 session release response message to the SMF.

An execution sequence of step 530 and step 531 is not specifically limited in this application, and the step may be performed in any step after step 512.

Step 532: The SMF sends a session management context update response message to the target AMF.

Step 533: The AMF triggers the source access network device to release a related resource.

An IP address allocation mechanism and an IP address pool configuration mechanism are described in detail below in this application.

First, an IP address allocation mechanism is introduced. One SMF and a plurality of UPFs form a set, for example, {SMF, UPF 1, UPF 2, UPF 3...}. The SMF is responsible for managing and controlling the plurality of UPFs, the plurality of UPFs share a same IP address pool, and the plurality of UPFs may serve a same area. The IP address pool is a list of IP addresses that can be allocated to a terminal device, and may also be referred to as a user plane (user plane, UP) address pool of the terminal device. That the plurality of UPFs share one IP address pool means that for different UPFs in the set, the SMF may select a proper IP address from a same IP address pool when allocating an IP address to the terminal device.

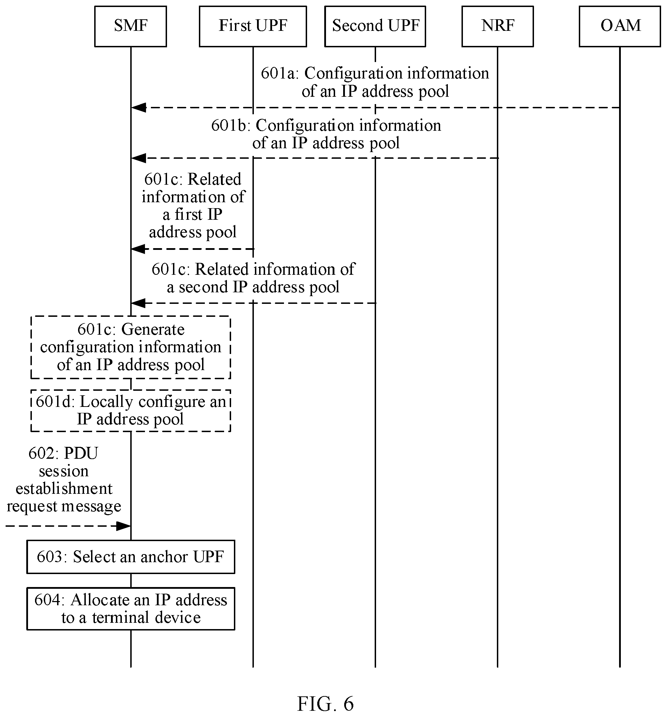

FIG. 6 shows an example of a flowchart in which an SMF configures an IP address pool and allocates an IP address to a terminal device according to an embodiment of this application. As shown in FIG. 6, the process may include the following steps.

Steps 601a to 601d: The SMF configures an IP address pool.

In this application, the SMF may configure, in the following four configuration manners, an IP address pool shared by a plurality of UPFs.

Configuration manner 1: An OAM provides configuration information of an IP address pool to the SMF.

As shown in step 601a, the OAM may send the configuration information of the IP address pool to the SMF, and the SMF may configure the IP address pool based on the received configuration information of the IP address pool. Optionally, the SMF may store the configuration information of the IP address pool.

The configuration information of the IP address pool may include one or more of the following information: a list of UPFs sharing the IP address pool, information about a satellite orbit in which the UPFs sharing the IP address pool are located, identification information of the IP address pool, IP address range information of the IP address pool, information about a network instance in which the IP address pool is located, information about a network slice in which the IP address pool is located, or information about an IP version supported by the IP address pool.

For example, in an implementation, the configuration information of the IP address pool may include the list of UPFs sharing the IP address pool and the identification information of the IP address pool. Optionally, the configuration information of the IP address pool may further include the information about the IP address range of the IP address pool. Optionally, the configuration information of the IP address pool may further include the information about the network instance in which the IP address pool is located, the information about the network slice in which the IP address pool is located, or the information about the IP version supported by the IP address pool.

In another implementation, the configuration information of the IP address pool may include the information about the satellite orbit in which the UPF sharing the IP address pool are located and the identification information of the IP address pool. Optionally, the configuration information of the IP address pool may further include the information about the IP address range of the IP address pool. Optionally, the configuration information of the IP address pool may further include the information about the network instance in which the IP address pool is located, the information about the network slice in which the IP address pool is located, or the information about the IP version supported by the IP address pool.

It should be noted that, in a scenario in which a plurality of UPFs sharing a same IP address pool are all deployed on a satellite, information about a satellite orbit in which the UPFs sharing the IP address pool are located may alternatively indirectly indicate a list of UPFs sharing the IP address pool. In view of this, in this application, identification information of a UPF or a UPF list may be replaced with information about a satellite orbit.

Configuration manner 2: An NRF provides configuration information of an IP address pool to the SMF.

As shown in step 601b, the NRF may send the configuration information of the IP address pool to the SMF, and the SMF may configure the IP address pool based on the received configuration information of the IP address pool. Optionally, the SMF may store the configuration information of the IP address pool.

For specific content of the configuration information of the IP address pool in the configuration manner 2, refer to the related descriptions in the configuration manner 1 or the foregoing method embodiment. Details are not described again.

In addition to the NRF that provides the configuration information of the IP address pool to the SMF, another control plane network element such as a UDM or a PCF may further provide the configuration information of the IP address pool to the SMF.

Configuration manner 3: A plurality of UPFs respectively provide, to the SMF, related information of IP address pools associated with the plurality of UPFs.

As shown in step 601c, a first UPF may send related information of a first IP address pool to the SMF by using an N4 association message, and a second UPF may send related information of a second IP address pool to the SMF by using the N4 association message. The SMF may generate configuration information of an IP address pool based on the received related information of the first IP address pool and the received related information of the second IP address pool, to complete configuration of the IP address pool.

The related information of the first IP address pool may include one or more of the following information: identification information of the first UPF, information about a satellite orbit in which the first UPF is located, identification information of the IP address pool, IP address range information of the IP address pool, information about a network instance in which the IP address pool is located, information about a network slice in which the IP address pool is located, or information about an IP version supported by the IP address pool.

The related information of the second IP address pool may include one or more of the following information: identification information of the second UPF, information about a satellite orbit in which the second UPF is located, identification information of the IP address pool, IP address range information of the IP address pool, information about a network instance in which the IP address pool is located, information about a network slice in which the IP address pool is located, or information about an IP version supported by the IP address pool.

Optionally, the first UPF may further send, by using the N4 association message, information about time of serving a specific area. Similarly, the second UPF may further send, by using the N4 association message, information about time of serving a specific area.

The N4 association message may be an N4 association establishment request message or an N4 association establishment response message. For example, the first UPF is used as an example. In an implementation, the SMF may send an N4 association establishment request message to the first UPF. After receiving the N4 association establishment request message, the first UPF may send an N4 association establishment response message to the SMF. The N4 association establishment response message includes the related information of the first IP address pool. In another implementation, the first UPF may send an N4 association establishment request message to the SMF, where the N4 association establishment request message includes the related information of the first IP address pool. After receiving the N4 association establishment request message, the SMF may send an N4 association establishment response message to the first UPF.

Configuration manner 4: The SMF locally configures an IP address pool.

As shown in step 601d, the SMF may store configuration information of the IP address pool, and the SMF may locally configure the IP address pool based on the configuration information.

For specific content of the configuration information of the IP address pool in the implementation 4, refer to the related descriptions in the configuration manner 1 or the foregoing method embodiment. Details are not described again.

For example, in an implementation, the configuration information of the IP address pool may include a list of UPFs sharing the IP address pool and IP address range information of the IP address pool. Optionally, the configuration information of the IP address pool may further include information about a network instance in which the IP address pool is located, information about a network slice in which the IP address pool is located, or information about an IP version supported by the IP address pool.

It should be noted that, that a plurality of UPFs share one IP address pool mentioned above is merely an example. In this application, a plurality of UPFs unnecessarily share only one IP address pool. In other words, the plurality of UPFs may also share a plurality of IP address pools. In this scenario, the identification information of the IP address pool, the IP address range information, and the like in the configuration information of the IP address pool may be correspondingly modified to a plurality of pieces of information.

Step 602: The SMF receives a PDU session establishment request message from the terminal device.

Step 603: The SMF selects a proper anchor UPF for a PDU session of the terminal device.

Step 604: The SMF allocates an IP address to the terminal device.

For example, the SMF may allocate an IP address to the terminal device based on a data network name (data network name, DNN) or slice information corresponding to the PDU session, information about the anchor UPF selected in step 603, and a correspondence that is between a UPF and the identification information of the IP address pool/the IP address range information and that is determined based on the configuration information of the IP address pool.

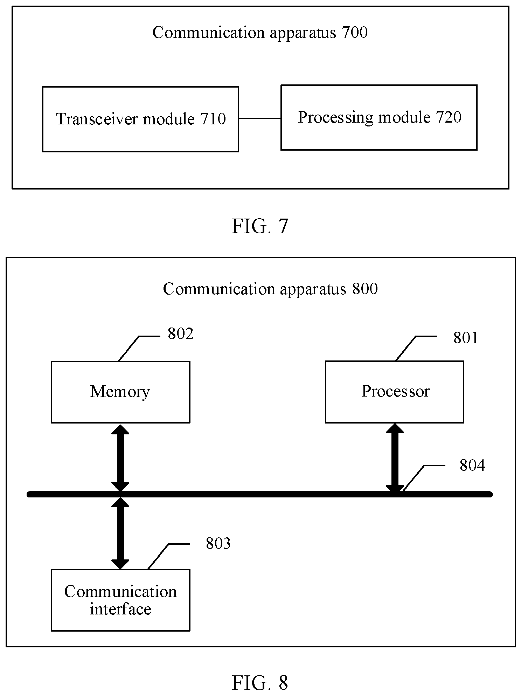

An embodiment of this application further provides a communication apparatus. FIG. 7 is a schematic diagram of a structure of a communication apparatus according to an embodiment of this application. The communication apparatus 700 includes a transceiver module 710 and a processing module 720. The communication apparatus may be configured to implement a function of the session management function network element in any one of the foregoing method embodiments. The session management function network element may be the SMF shown in the flowcharts in FIG. 3 to FIG. 6. The communication apparatus may be a network device, or an apparatus (for example, a chip included in a network device) that can support the network device in implementing a corresponding function in the foregoing method embodiments.

For example, when the communication apparatus performs an operation or a step corresponding to the session management function network element in the method embodiment shown in FIG. 3, the transceiver module 710 is configured to receive a first request message from an access and mobility management function network element, where the first request message indicates that a PDU session of a terminal device is to be switched; the processing module 720 is configured to determine that an anchor of the PDU session needs to be switched, where an old anchor of the PDU session is a first user plane function network element; and the processing module 720 is further configured to: select a second user plane function network element as a new anchor of the PDU session, and allocate a first IP address to the terminal device, where the first IP address is the same as an IP address of the terminal device used when the first user plane function network element serves as the anchor of the PDU session.

In a possible design, the first user plane function network element and the second user plane function network element share a same IP address pool, the IP address pool indicates a range of an IP address that can be allocated to the terminal device, and the IP address pool includes the first IP address.

In a possible design, the processing module 720 may specifically select the second user plane function network element as the new anchor of the PDU session from user plane function network elements sharing the IP address pool.

In a possible design, the processing module 720 may specifically select the second user plane function network element based on information about time at which the user plane function network elements sharing the IP address pool serve an area in which the terminal device is located or service area information of the user plane function network elements at current time.

In a possible design, the transceiver module 710 may further receive information about a target access network device from the access and mobility management function network element. Correspondingly, the processing module 720 may specifically select the second user plane function network element corresponding to the target access network device as the new anchor of the PDU session.

In a possible design, when the first request message includes information about the second user plane function network element, the processing module 720 may specifically select the second user plane function network element as the new anchor of the PDU session, where the second user plane function network element is a candidate of the new anchor of the PDU session.

Alternatively, the transceiver module 710 may receive the information about the second user plane function network element from the first user plane function network element. Correspondingly, the processing module 720 may specifically select the second user plane function network element as the new anchor of the PDU session.

In a possible design, the processing module 720 may specifically determine, based on the received information about the second user plane function network element from the access and mobility management function network element or the first user plane function network element, that the anchor of the PDU session needs to be switched.

In a possible design, the first request message includes first indication information, and the first indication information indicates that the anchor of the PDU session needs to be switched. Correspondingly, the processing module 720 may determine, based on the first indication information, that the anchor of the PDU session needs to be switched.

In a possible design, the transceiver module 710 may alternatively receive second indication information from the access and mobility management function network element, where the second indication information indicates that an access network device serving the PDU session and the first user plane function network element are located on a same satellite. Correspondingly, the processing module 720 may determine, based on the second indication information, that the anchor of the PDU session needs to be switched.

In a possible design, the communication apparatus stores configuration information of the IP address pool, and the configuration information of the IP address pool may include but is not limited to one or more of the following information: a list of user plane function network elements sharing the IP address pool, information about a satellite orbit in which the user plane function network elements sharing the IP address pool are located, identification information of the IP address pool, IP address range information of the IP address pool, information about a network instance in which the IP address pool is located, information about a network slice in which the IP address pool is located, or information about an IP version supported by the IP address pool.

In a possible design, the processing module 720 may further locally configure the IP address pool; or the transceiver module 710 may receive configuration information of the IP address pool from a network repository function network element.

In a possible design, the transceiver module 710 may further receive related information of a first IP address pool from the first user plane function network element, and receive related information of a second IP address pool from the second user plane function network element. The processing module 720 is further configured to generate the configuration information of the IP address pool based on the related information of the first IP address pool and the related information of the second IP address pool. The related information of the first IP address pool includes but is not limited to one or more of the following information: identification information of the first user plane function network element, information about a satellite orbit in which the first user plane function network element is located, identification information of the IP address pool, IP address range information of the IP address pool, information about a network instance in which the IP address pool is located, information about a network slice in which the IP address pool is located, or information about an IP version supported by the IP address pool. The related information of the second IP address pool includes but is not limited to one or more of the following information: identification information of the second user plane function network element, information about a satellite orbit in which the second user plane function network element is located, identification information of the IP address pool, IP address range information of the IP address pool, information about a network instance in which the IP address pool is located, information about a network slice in which the IP address pool is located, or information about an IP version supported by the IP address pool.

The processing module 720 in the communication apparatus may be implemented by at least one processor or processor-related circuit component. The transceiver module 710 may be implemented by at least one transceiver, transceiver-related circuit component, or communication interface. Operations and/or functions of the modules in the communication apparatus are respectively used to implement corresponding procedures of the methods shown in FIG. 3 to FIG. 6. For brevity, details are not described herein again. Optionally, the communication apparatus may further include a storage module. The storage module may be configured to store data and/or instructions. The transceiver module 710 and/or the processing module 720 may read the data and/or the instructions in the storage module, so that the communication apparatus implements the corresponding method. The storage module may be implemented, for example, by using at least one memory.

The storage module, the processing module, and the transceiver module may exist separately, or all or some of the modules may be integrated. For example, the storage module and the processing module are integrated, or the processing module and the transceiver module are integrated.

FIG. 8 is a schematic diagram of another structure of a communication apparatus according to an embodiment of this application. The communication apparatus may be configured to implement a function corresponding to the session management function network element in the foregoing method embodiments. The session management function network element may be the SMF shown in the procedures in FIG. 3 to FIG. 6. The communication apparatus may be a network device, or an apparatus (for example, a chip included in a network device) that can support the network device in implementing a corresponding function in the foregoing method embodiments.

The communication apparatus 800 may include a processor 801 and a memory 802. The memory 802 is configured to store program instructions and/or data, and the processor 801 is configured to execute the program instructions stored in the memory 802, to implement the methods in the foregoing method embodiments. The memory 802 may be coupled to the processor 801. The coupling is an indirect coupling or a communication connection between apparatuses, units, or modules, may be in an electrical, mechanical, or another form, and is used for information exchange between the apparatuses, the units, or the modules.

Optionally, the communication apparatus 800 may further include a communication interface 803. The communication interface 803 is configured to communicate with another device by using a transmission medium, for example, transmit a received signal from another communication apparatus to the processor 801, or transmit a signal from the processor 801 to another communication apparatus. The communication interface 803 may be a transceiver, or may be an interface circuit such as a transceiver circuit or a transceiver chip.

In an embodiment, the communication interface 803 may be specifically configured to perform an action of the transceiver module 710, and the processor 801 may be specifically configured to perform an action of the processing module 720. Details are not described herein in this application.

A specific connection medium between the processor 801, the memory 802, and the communication interface 803 is not limited in this embodiment of this application. In this embodiment of this application, the processor 801, the memory 802, and the communication interface 803 are connected through a bus 804 in FIG. 8, and the bus is represented by a thick line in FIG. 8. A manner of a connection between other components is merely an example for description, and is not limited thereto. The bus may be classified into an address bus, a data bus, a control bus, and the like. For ease of representation, only one thick line represents the bus in FIG. 8, but this does not mean that there is only one bus or only one type of bus.

An embodiment of this application further provides a chip system, including a processor. The processor is coupled to a memory, and the memory is configured to store a program or instructions. When the program or the instructions are executed by the processor, the chip system is enabled to implement the method corresponding to the session management function network element in any one of the foregoing method embodiments.

Optionally, there may be one or more processors in the chip system. The processor may be implemented by hardware, or may be implemented by software. When the processor is implemented by the hardware, the processor may be a logic circuit, an integrated circuit, or the like. When the processor is implemented by the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory memory, for example, a read-only memory (read-only memory, ROM). The memory and the processor may be integrated on a same chip, or may be respectively disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable controller (programmable logic device, PLD), or another integrated chip.

It should be understood that the steps in the foregoing method embodiments may be completed by using a hardware integrated logic circuit in the processor or instructions in a form of software. The steps of the methods disclosed with reference to embodiments of this application may be directly performed by a hardware processor, or may be performed by a combination of hardware in the processor and a software module.

An embodiment of this application further provides a computer-readable storage medium. The computer storage medium stores a computer program or instructions. When the computer program or the instructions are executed, a communication apparatus is enabled to perform the method in any one of the foregoing method embodiments.

An embodiment of this application further provides a computer program product. When a communication apparatus reads and executes the computer program product, the communication apparatus is enabled to perform the method in any one of the foregoing method embodiments.

An embodiment of this application further provides a communication system. The communication system includes a session management function network element, an access and mobility management function network element, one or more user plane function network elements (for example, a first user plane function network element and a second user plane function network element), and a terminal device. Network elements or functions in the communication system may cooperate with each other to implement the method in any one of the foregoing method embodiments.

It should be understood that, the processor in embodiments of this application may be a CPU, or may be another general-purpose processor, a DSP, an ASIC, an FPGA or another programmable logic device, a discrete gate or a transistor logic device, a discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The non-volatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

It should be noted that when the processor is a general purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type.

It should be understood that numbers in various embodiments of this application are merely used for differentiation for ease of description. Sequence numbers of the foregoing processes or steps do not mean execution sequences. The execution sequences of the processes or steps should be determined based on functions and internal logic of the processes or steps, and should not constitute any limitation on the implementation processes of embodiments of the present invention.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the apparatus embodiments described above are merely examples. For example, division of the units is merely logical function division, and there may be another division manner in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, that is, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the function is implemented in a form of a software functional unit and sold or used as an independent product, the function may be stored in a computer-readable storage medium. Based on such an understanding, the technical solutions in this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a ROM, a RAM, a magnetic disk, or an optical disc.

In embodiments of this application, unless otherwise specially stated or there is a logic conflict, terms and/or descriptions between different embodiments are consistent and may be mutually referenced, and technical features in different embodiments may be combined based on an internal logical relationship between the embodiments, to form a new embodiment.

## Claims

1. A method for maintaining session continuity, wherein the method comprises:
receiving, by a session management function network element, a first request message from an access and mobility management function network element, wherein the first request message indicates that a protocol data unit PDU session of a terminal device is to be switched;
determining, by the session management function network element, that an anchor of the PDU session needs to be switched, wherein an old anchor of the PDU session is a first user plane function network element; and
selecting, by the session management function network element, a second user plane function network element as a new anchor of the PDU session, and allocating a first IP address to the terminal device, wherein the first IP address is the same as an IP address of the terminal device used when the first user plane function network element serves as the anchor of the PDU session.

2. The method according to claim 1, wherein the first user plane function network element and the second user plane function network element share a same IP address pool, the IP address pool indicates a range of an IP address that can be allocated to the terminal device, and the IP address pool comprises the first IP address.

3. The method according to claim 2, wherein the selecting, by the session management function network element, a second user plane function network element as a new anchor of the PDU session comprises:
selecting, by the session management function network element, the second user plane function network element as the new anchor of the PDU session from user plane function network elements sharing the IP address pool.

4. The method according to claim 3, wherein the selecting, by the session management function network element, the second user plane function network element as the new anchor of the PDU session from a plurality of user plane function network elements sharing the IP address pool comprises:
selecting, by the session management function network element, the second user plane function network element based on information about time at which the user plane function network elements sharing the IP address pool serve an area in which the terminal device is located or service area information of the user plane function network elements at current time.

5. The method according to claim 1, wherein the selecting, by the session management function network element, a second user plane function network element as a new anchor of the PDU session comprises:
receiving, by the session management function network element, information about a target access network device from the access and mobility management function network element; and
selecting, by the session management function network element, the second user plane function network element corresponding to the target access network device as the new anchor of the PDU session.

6. The method according to claim 1, wherein the selecting, by the session management function network element, a second user plane function network element as a new anchor of the PDU session comprises:
when the first request message comprises information about the second user plane function network element, selecting, by the session management function network element, the second user plane function network element as the new anchor of the PDU session; or
the method further comprises:
receiving, by the session management function network element, the information about the second user plane function network element from the first user plane function network element, and selecting the second user plane function network element as the new anchor of the PDU session.

7. The method according to claim 6, wherein the determining, by the session management function network element, that an anchor of the PDU session needs to be switched comprises:
determining, by the session management function network element based on the received information about the second user plane function network element from the access and mobility management function network element or the first user plane function network element, that the anchor of the PDU session needs to be switched.

8. The method according to any one of claims 1 to 6, wherein the first request message comprises first indication information, and the first indication information indicates that the anchor of the PDU session needs to be switched; and
the determining, by the session management function network element, that an anchor of the PDU session needs to be switched comprises:
determining, by the session management function network element based on the first indication information, that the anchor of the PDU session needs to be switched.

9. The method according to any one of claims 1 to 6, wherein the determining, by the session management function network element, that an anchor of the PDU session needs to be switched comprises:
receiving, by the session management function network element, second indication information from the access and mobility management function network element, wherein the second indication information indicates that an access network device serving the PDU session and the first user plane function network element are located on a same satellite; and
determining, by the session management function network element based on the second indication information, that the anchor of the PDU session needs to be switched.

10. The method according to any one of claims 2 to 4, wherein the session management function network element stores configuration information of the IP address pool, and the configuration information of the IP address pool comprises one or more of the following information:
a list of user plane function network elements sharing the IP address pool, information about a satellite orbit in which the user plane function network elements sharing the IP address pool are located, identification information of the IP address pool, IP address range information of the IP address pool, information about a network instance in which the IP address pool is located, information about a network slice in which the IP address pool is located, or information about an IP version supported by the IP address pool.

11. The method according to claim 10, wherein the method further comprises:
locally configuring, by the session management function network element, the IP address pool; or
receiving, by the session management function network element, the configuration information of the IP address pool from a network repository function network element.

12. The method according to claim 10, wherein the method further comprises:
receiving, by the session management function network element, related information of a first IP address pool from the first user plane function network element;
receiving, by the session management function network element, related information of a second IP address pool from the second user plane function network element; and
generating, by the session management function network element, the configuration information of the IP address pool based on the related information of the first IP address pool and the related information of the second IP address pool, wherein
the related information of the first IP address pool comprises one or more of the following information: identification information of the first user plane function network element, information about a satellite orbit in which the first user plane function network element is located, identification information of the IP address pool, IP address range information of the IP address pool, information about a network instance in which the IP address pool is located, information about a network slice in which the IP address pool is located, or information about an IP version supported by the IP address pool; and
the related information of the second IP address pool comprises one or more of the following information: identification information of the second user plane function network element, information about a satellite orbit in which the second user plane function network element is located, identification information of the IP address pool, IP address range information of the IP address pool, information about a network instance in which the IP address pool is located, information about a network slice in which the IP address pool is located, or information about an IP version supported by the IP address pool.

13. A communication apparatus, comprising a module configured to perform the method according to any one of claims 1 to 12.

14. A communication apparatus, comprising a processor and a memory, wherein the processor is coupled to the memory, the memory stores computer program instructions, and the processor runs the computer program instructions to implement the method according to any one of claims 1 to 12.

15. A computer-readable storage medium, wherein the computer-readable storage medium stores program instructions, and when the program instructions are executed by a communication apparatus, the method according to any one of claims 1 to 12 is implemented.

16. A computer program product comprising instructions, wherein when the computer program product is run on a computer, the computer is enabled to perform the method according to any one of claims 1 to 12.
